# EUROPÄISCHE PATENTSCHRIFT

(11) **EP 1 362 717 B1**
(45) Veröffentlichungstag und Bekanntmachung des Hinweises auf die Patenterteilung: **11.04.2007**
(21) Anmeldenummer: 03003918.4
(22) Anmeldetag: 21.02.2003
(51) Int. Cl.: B60C 25/132

(54) **Verfahren und Vorrichtung zum Montieren eines Luftreifens auf eine Felge eines Kraftfahrzeugrades**
Method and apparatus for tyre mounting on a wheel rim
Procédé et dispositif de montage d'un pneumatique sur une jante de roue

(30) Priorität: 17.05.2002 DE 10222164
(43) Veröffentlichungstag der Anmeldung: 19.11.2003
(73) Patentinhaber: Hofmann Maschinen- und Anlagenbau GmbH, 67559 Worms (DE)
(72) Erfinder: Kupka, Heinz, 69502 Hemsbach (DE); Wattendorf, Günther, 64625 Bensheim (DE)
(74) Vertreter: Nöth, Heinz

(56) Entgegenhaltungen:
- FR-A- 996 319
- US-B1- 6 276 422

## Beschreibung

Die Erfindung betrifft ein Verfahren nach dem Oberbegriff des Patentanspruches 1 und eine Vorrichtung nach dem Oberbegriff des Patentanspruches 4 zum Montieren eines Luftreifens auf eine Felge eines Kraftfahrzeuges.

Ein derartiges Verfahren und eine derartige Vorrichtung sind aus FR - A - 996 319 bekannt. Beim bekannten Verfahren und bei der bekannten Vorrichtung sind eine erste Führungseinrichtung zum Führen wenigstens eines Montagewerkzeuges entlang einer Kreisbahn um die Achse der festgehaltenen Felge, sowie eine zweite Führungseinrichtung für einen Niederhalter, durch welchen ein in axialer Richtung in das Felgenbett bei Beginn des Montagevorgangs bewegtes Wulstteil des Luftreifens während des weiteren Vorgangs dieser axialen Position niedergehalten wird, vorgesehen. Die zweite Führungseinrichtung beinhaltet ferner eine Einstelleinrichtung für die Einstellung der axialen Position des Niederhalters. Dabei wird die Position des Niederhalters so eingestellt, dass das Wulstteils des Luftreifens zwischen der Felgenschulter und dem Felgenhorn außerhalb des Felgentiefbetts gehalten wird.

Auch bei der aus US-B1-626 76 422 bekannten Reifenmontiervorrichtung wird der Wulstniederhalter welcher auf dem obenliegenden Felgenhorn anliegt, so positioniert, dass das niedergehaltene Wulstteil zwischen Felgenschulter und Felgenhorn außerhalb des Felgentiefbetts gehalten wird.

Aus DE-A 105 454 ist es bekannt, zum maschinellen Montieren des Luftreifens auf der Felge eines in horizontaler Lage festgehaltenen Scheibenrades den Reifen unter einem bestimmten Winkel auf das Scheibenrad zu legen. Dabei befindet sich der eine Teil des Reifens auf der Höhe der Felge und der andere Teil ragt über die Felge hinaus. Beim Montagevorgang dreht sich ein Montagewerkzeug, das aus wenigstens einer Montagerolle und einem Reifenabweiser bestehen kann, um die Radachse, wobei auf die oben liegende Seitenwand des Luftreifens an aufeinanderfolgenden Umfangsstellen ein Montagedruck im wesentlichen in axialer Richtung ausgeübt wird. Dabei wird der untenliegende Reifenwulst am untenliegenden Felgenhorn des Scheibenrades angeordnet und der obenliegende Reifenwulst über einen Hump der Felge in das Felgentiefbett gedrückt.

In dieser Anordnung wird das Kraftfahrzeugrad mit dem noch ungefüllten Luftreifen in eine Füllstation gebracht und mittels einer Füllglocke gefüllt, wie es beispielsweise aus der Firmenschrift Hofmann Report 66 "Automatische Reifenmontage- und Füllanlage RMS-MT" mit dem Impressum 96510230000193 bekannt ist.

Bei der Montage ist es ferner bekannt, das Montagewerkzeug in Abhängigkeit von der Breite und dem Durchmesser des Scheibenrades bzw. der Felge für den Montagevorgang zu positionieren (DT 2105454).

### [Aufgabe der Erfindung]

Aufgabe der Erfindung ist es, ein Verfahren und eine Vorrichtung der eingangs genannten Art zu schaffen, bei welchen die Luftreifen aufeinanderfolgender Kraftfahrzeugräder unterschiedlicher Radtypen so an den Felgen angeordnet sind, dass ein einwandfreies Füllen der Luftreifen gewährleistet wird.

Diese Aufgabe wird beim Verfahren der eingangs genannten Art erfindungsgemäß durch die kennzeichnenden Merkmale des Patentanspruches 1 und bei der Vorrichtung erfindungsgemäß durch die kennzeichnenden Merkmale des Patentanspruches 4 gelöst.

Bei der Erfindung wird der Teil des Reifenwulstes bei horizontaler Anordnung des oben liegenden Reifenwulstes, welcher am Anfang des Montagevorgangs über die axiale Position des Humps in das Felgentiefbett gebracht worden ist, in dieser Position während der sich anschließenden weiteren Schritte des Montagevorgangs niedergehalten, wobei die axiale Position der Stelle, in welcher die Niederhaltekraft eingeleitet wird, in Abhängigkeit von der axialen Lage des Humps an der jeweiligen Felge der aufeinanderfolgenden Räder für die jeweils durchzuführenden Montiervorgänge variabel eingestellt. Diese axiale Lage lässt sich vorzugsweise stufenlos einstellen.

In vorteilhafter Weise kann auch die axiale Position der Stelle, in welcher die Niederhaltekraft eingeleitet wird, in Abhängigkeit von der axialen Lage des Humps an der jeweiligen Felge der aufeinanderfolgenden Räder für die jeweils durchzuführenden Montiervorgänge variabel eingestellt werden. Die axiale Lage der Kreisbahn, auf welcher das wenigstens eine Montagewerkzeug geführt wird, lässt sich ebenfalls vorteilhafterweise stufenlos einstellen.

Bei dem Hump handelt es sich um eine umlaufende geringe Erhöhung der Felgenschulter am Übergang der Felgenschulter zum Felgentiefbett. Der Hump dient auch dazu, dem Wulst bzw. der Fußpartie insbesondere eines schlauchlosen Luftreifens einen zusätzlichen Halt vor allem beim Fahren mit zu niedrigem Fülldruck zu gewährleisten. Bei der Reifenmontage wird durch den Hump der oben liegende Reifenwulst bis zum Füllen des Reifens in der sich anschließenden Füllstation im Felgentiefbett gehalten. Hierdurch wird das automatische Füllen mit Hilfe einer Füllglocke erleichtert, wobei bei steigendem Fülldruck der oben liegende Reifenwulst über den Hump in den Reifenwulstsitz der Felge gedrückt wird.

Wenn das Montagewerkzeug aus einem Werkzeugteil, mit welchem auf die Seitenwand des Luftreifens beim Montagevorgang der im wesentlichen axial gerichtete Druck ausgeübt wird, und aus einem Reifenabweiser besteht, können das Werkzeugteil, welches den Druck auf die Reifenseitenwand ausübt, in seiner axialen Position in Abhängigkeit von der axialen Lage des Humps und die axiale Position des Reifenabweisers in Abhängigkeit von der axialen Position des oben liegenden Felgenhorns eingestellt werden. Das Werkzeugteil, mit welchem auf die Reifenseitenwand ein Druck ausgeübt wird, ist vorzugsweise als Montagerolle ausgebildet.

Zur Einleitung der Niederhaltekraft, durch welche bei Beginn des Montagevorgangs der in das Felgentiefbett gebrachte oben liegende Wulstteil des Luftreifens in dieser Position festgehalten wird, ist ein Niederhalter vorgesehen, dessen axiale Positionierung beim Montagevorgang in Abhängigkeit von der axialen Lage des Humps an der jeweiligen Felge eingestellt wird. Diese Einstellung erfolgt vorzugsweise stufenlos zwischen den Montagevorgängen bei aufeinanderfolgenden Kraftfahrzeugrädern.

Ferner kann der radiale Abstand des Niederhalters von der Radachse vorzugsweise stufenlos eingestellt werden. Dieser radiale Abstand insbesondere des Teiles des Niederhalters, welcher zum Einleiten der Niederhaltekraft auf den nieder zu haltenden Wulstteil aufgesetzt wird, ist während des Montagevorgangs, d.h. beim Niederhalten geringer bemessen als der Radius des äußeren Umfangs des Felgenhorns. Die Führungseinrichtung, an welcher der Niederhalter gelagert ist, besitzt hierzu entsprechende Einstellmittel.

Beim beschriebenen Verfahren und bei der beschriebenen Vorrichtung werden das maschinelle Montieren von Reifen mit unterschiedlichen Querschnittshöhen und unterschiedlichen Reifenwulstsitzen mit zugehörigen Humps an den Felgen ermöglicht, wobei ein sich anschließendes sicheres maschinelles Füllen des Reifens in einer Füllstation, insbesondere mit Hilfe einer von oben aufgesetzten Füllglocke erreicht wird. In vorteilhafter Weise können schusssichere Luftreifen unterschiedlicher Typen aufeinanderfolgend montiert werden.

### [Beispiele]

Anhand der Figuren wird an Ausführungsbeispielen die Erfindung noch näher erläutert. Es zeigt:
- Fig. 1: in schnittbildlicher Darstellung ein Ausführungsbeispiel der Erfindung;
- Fig. 2: zwei Ausführungsbeispiele zur Einstellung der radialen Position eines Niederhalters; und
- Fig. 3: radiale Positionierungen des Niederhalters für zwei unterschiedliche axiale Positionen eines Humps an der Felge.

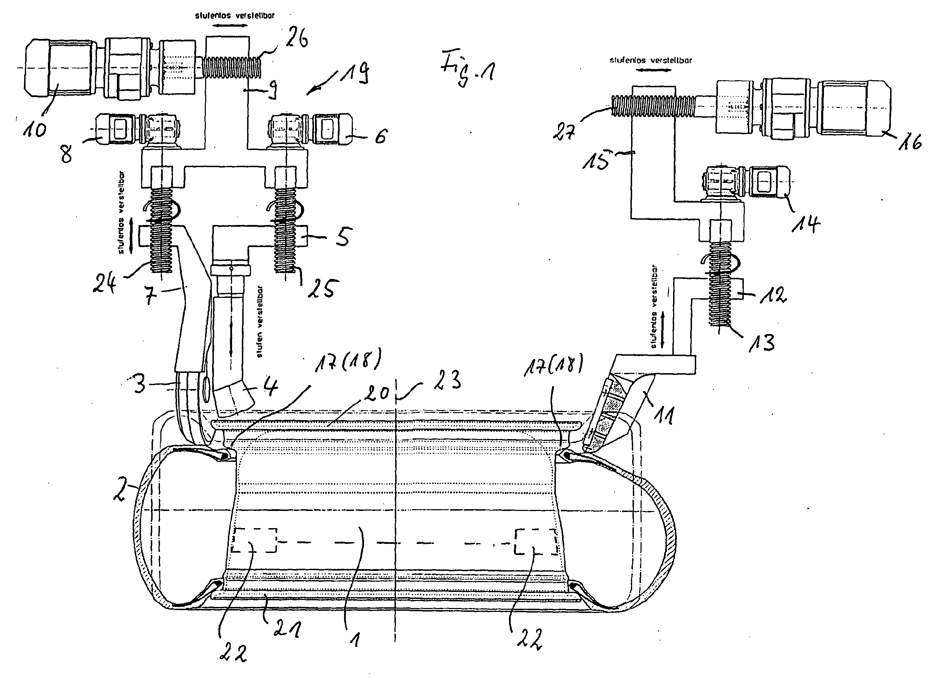

Die in Fig. 1 dargestellte Vorrichtung dient zum Montieren eines Luftreifens 2 auf eine Felge 1 eines Kraftfahrzeugrades. Eine Halteeinrichtung 22, welche in der Figur strichliert dargestellt ist, greift an der Felgeninnenseite an und dient zum Festhalten der Felge 1 in der Montiervorrichtung. Eine derartige Halteeinrichtung ist beispielsweise aus DE 2105454 bekannt. Die Felge 1 bzw. das Scheibenrad ist in der in der Fig. 1 dargestellten Montiervorrichtung in horizontaler Lage mit vertikaler Radachse 23 angeordnet.

An einer ersten Führungseinrichtung 19, welche im einzelnen noch erläutert wird, befindet sich ein Montagewerkzeug. Das Montagewerkzeug besteht aus zwei Werkzeugteilen, nämlich einer Montagerolle 3 und einem Reifenabweiser 4. Das Montagewerkzeug kann auch zwei Montagerollen aufweisen. Die Montagerolle 3 und der Reifenabweiser 4 sind an einem gemeinsamen Träger 9 der Führungseinrichtung 19 stufenlos in Richtung der Radachse 23 verstellbar gelagert. Zur stufenlose Verstellung dienen für die Montagerolle 3 eine Stellschraube 24, welche von einem elektrischen Stellantrieb 8 gedreht werden kann. Für die stufenlose axiale Verstellbarkeit des Reifenabweisers 4 dient eine Stellschraube 25, welche von einem elektrischen Stellantrieb 6 gedreht wird. Die Stellantriebe und die beiden Werkzeugteile (Montagerolle 3 und Reifenabweiser 4) sind an dem gemeinsamen Träger 9 gelagert. Die Montagerolle 3 ist hierzu an einem zugeordneten Träger 7, an welchem die Einstelleinrichtung (Stellschraube 24) zum axialen Verstellen der Montagerolle 3 angreift, drehbar gelagert. An einem Träger 5, an welchem ebenfalls die axiale Verstelleinrichtung (Stellschraube 25) für die axiale Verstellung des Reifenabweisers 4 angreift, ist der Reifenabweiser 4 befestigt.

Durch diese Anordnung können sowohl die Montagerolle als auch der Reifenabweiser 4 separat und unabhängig voneinander in gewünschte axiale Positionen gebracht werden.

Durch eine gemeinsame Verstelleinrichtung in Form einer weiteren Stellschraube 26, welche von einem elektrischen Stellantrieb 10 angetrieben wird, können die beiden Werkzeugteile des Montagewerkzeugs, nämlich die Montagerolle 3 und der Reifenabweiser 4 gemeinsam auf bestimmte Radien um die Radachse 23 eingestellt werden. Hierzu greift die Stellschraube 26 am gemeinsamen Träger 9 an.

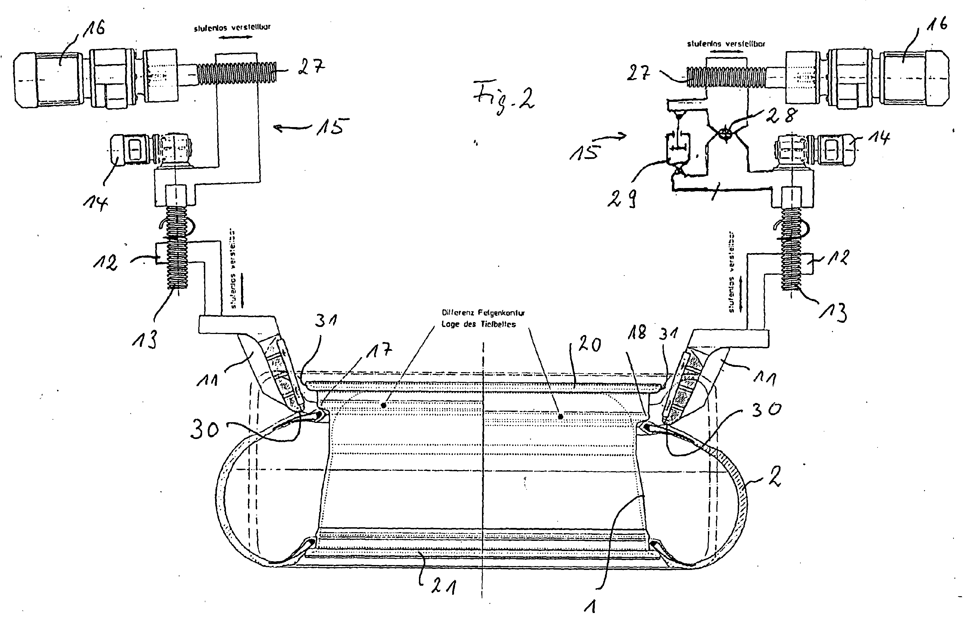

Beim Montiervorgang wird das Montagewerkzeug, welches beim dargestellten Ausführungsbeispiel aus der Montagerolle 3 und dem Reifenabweiser 4 besteht, auf einer Kreisbahn um die Radachse 23 geführt. Die Drehbewegung des Montagewerkzeugs beginnt an dem Teil des schrägliegenden Reifens, welcher etwa auf der Höhe des Felgenbettes liegt. Dabei wird zu Beginn des Montagevorgangs der oben liegende Reifenwulst unter einen an der außen liegenden Felgenfläche vorgesehenen umlaufenden Hump 17 bzw. 18 gedrückt. Wenn, wie aus der Fig. 2 zu ersehen ist, bei aufeinanderfolgenden Kraftfahrzeugrädern die Humps 17 und 18 der Felgen unterschiedliche axiale Positionen einnehmen, wird die axiale Position insbesondere des Werkzeugteils des Montagewerkzeugs, das den Druck auf die Seitenwand (oben liegende Seitenwand) des Luftreifens 2 ausübt, axial so positioniert, dass die Druckfläche, welche bei der Montagerolle 3 von der umlaufenden Rollenfläche gebildet wird, den Reifenwulst über den Hump 17 bzw. 18 in das Felgentiefbett drückt. Da die Kreisbahn, auf welcher das Montagewerkzeug um die Radachse 23 weitergeführt wird, in der gleichen axialen Position (vertikalen Höhe) sich befindet, wird der oben liegende Reifenwulst entlang seinem gesamten Umfang in das Felgentiefbett über den Hump 17 bzw. 18 gedrückt, wie es aus den Fig. 1 und 2 zu ersehen ist.

Der gleichzeitig auf einer inneren Kreisbahn mitgeführte Reifenabweiser 4 gewährleistet, dass beim Montagevorgang der oben liegende Reifenwulst über das oben liegende Felgenhorn 20 geführt wird. Die axiale Positionierung des Reifenabweisers 4 erfolgt in Abhängigkeit von der axialen Position des oben liegenden Felgenhorns 20 und insbesondere in Abhängigkeit vom axialen Abstand des oben liegenden Felgenhorns 20 zum Hump 17 bzw. 18. Die axiale Verstellung erfolgt mit Hilfe der vom elektrischen Antrieb 6 angetriebenen Stellschraube 25, mit welcher der Träger 5 und der daran befestigte Reifenabweiser in axialer Richtung stufenlos verstellt werden kann.

Die dargestellte Vorrichtung besitzt ferner eine zweite Führungseinrichtung 15 für ein als Niederhalter 11 ausgebildetes Positionierwerkzeug. Der Niederhalter 11 dient zur Fixierung der axialen Position des bei Beginn des Montagevorgangs über den Hump 17 bzw. 18 hinweg in das Felgentiefbett gedrückten Wulstteiles des zu montierenden Luftreifens 2. Durch den Niederhalter 11 ist sichergestellt, dass während des Montagevorgangs der jeweils über den Hump 17 bzw. 18 in das Felgentiefbett geschobene Wulstteil des Luftreifens 2 in dieser axialen Position verbleibt, bis der Montagevorgang beendet ist. Der Niederhalter 11 ist an einem Träger 12 befestigt, an welchem eine Einstelleinrichtung zur axialen Positionierung des Niederhalters 11 in Form einer Stellschraube 13 angreift. Die Stellschraube 13 wird von einem elektrischen Stellantrieb 14 angetrieben. Die aus dem elektrischen Stellantrieb 14 und der Stellschraube 13 bestehende Einstelleinrichtung ist zusammen mit dem Träger 12 und dem Niederhalter 11 an einem Träger der Führungseinrichtung 15 befestigt. Der Träger der Führungseinrichtung 15 kann in seiner radialen Positionierung in Abhängigkeit vom Felaendurchmesser mit Hilfe eines elektrischen Stellantriebs 16 und dadurch angetriebener Stellschraube 27 stufenlos eingestellt werden.

Anstelle der von elektrischen Antrieben gedrehten Stellschrauben bzw. Stellspindeln können auch andere Einstellmittel, beispielsweise pneumatische oder hydraulische Einstellmittel in Form von Kolben-/Zylinderanordnungen zum Einsatz kommen. Beim dargestellten Ausführungsbeispiel wird sowohl der Werkzeugteil des Montagewerkzeugs, insbesondere die Montagerolle, mit welcher der Montagedruck in axialer Richtung auf die Seitenwand des zu montierenden Luftreifens 2 ausgeübt wird, als auch der Niederhalter 11 in Abhängigkeit von der axialen Lage des jeweiligen Humps 17 bzw. 18 bei aufeinanderfolgenden mit Luftreifen 2 zu bestückenden Scheibenrädern eingestellt. Hierzu kann eine nicht näher dargestellte Steuereinrichtung für die verschiedenen Stellantriebe vorgesehen sein, in welche die axialen Positionen der Humps 17 bzw. 18 an den aufeinanderfolgenden Scheibenrädern eingegeben werden. Dies kann dadurch erfolgen, dass die nach außen weisenden Felgenkonturen der Scheibenräder im Hinblick auf die axialen Lagen der Humps abgetastet werden oder dass die Radtypen in die Steuereinrichtung für die Stellantriebe eingegeben werden und sich daraus die jeweilige axiale Position der Humps 17 und 18 aufeinanderfolgender Räder ergeben. Die Radtypen können durch entsprechende Kodierungen, welche an den Rädern vorgesehen sind, maschinell erkannt werden.

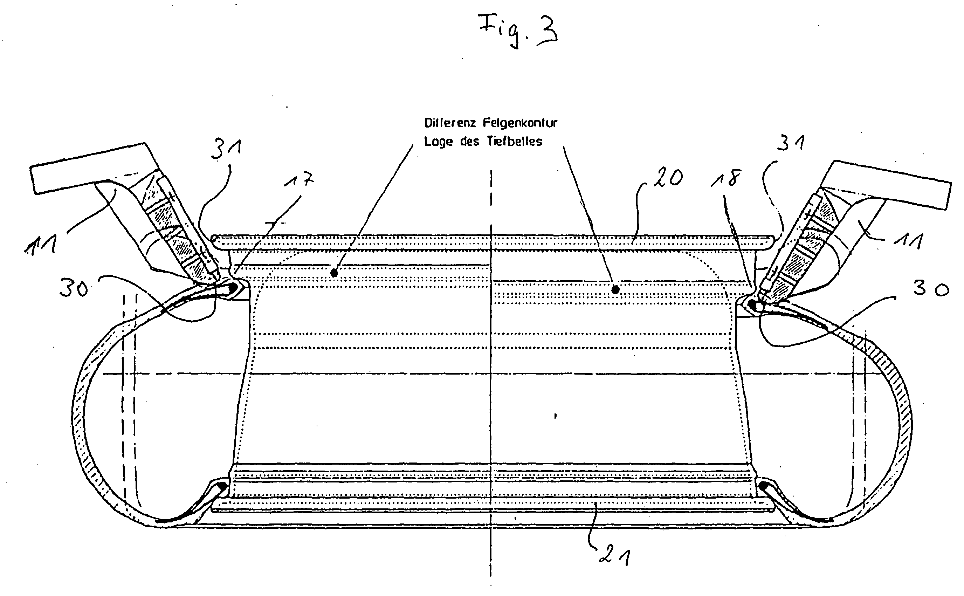

In den Fig. 1 und 2 ist die jeweilige Position des Niederhalters 11 nach seiner axialen Verstellung in Abhängigkeit von der jeweiligen Lage des Humps 17 bzw. 18 dargestellt. Für den Montagevorgang wird der auf den niederzuhaltenden Wulstteil aufgesetzte Teil 30 des Niederhalters 11 radial nach innen bewegt, wie es in der Fig. 3 dargestellt ist. Die radiale Bewegung nach innen erfolgt soweit, dass der Teil 30 gegenüber der Radachse 23 einen geringeren Abstand aufweist als der äußere Umfang 31 des Felgenhorns 20.

Diese nach innen gerichtete radiale Bewegung kann durch die von dem Stellantrieb 16 und der Stellschraube 27 gebildeten Einstelleinrichtung bewirkt werden (linkes Ausführungsbeispiel in der Fig. 2). Es ist jedoch auch möglich, diese radiale Verstellung durch eine Schwenkbewegung des Niederhalters 11 um einen Drehpunkt 28 zu bewirken (rechtes Ausführungsbeispiel in Fig. 2). Dabei wird der Stellantrieb 14 und die Stellschraube 13, welche zur axialen Verstellung des Niederhalters 11 dienen, mitverschwenkt. Die Verschwenkung kann durch eine Kolben-/Zylinderanordnung 29 bewirkt werden. Die Kolben-/Zylinderanordnung wird von der nicht näher dargestellten Steuereinrichtung dann betätigt, wenn der Niederhalter 11 in die jeweilige in der Fig. 2 axiale Position gebracht ist. Anstelle der Kolben-/Zylinderanordnung 29 kann auch eine elektrische Betätigungseinrichtung zum Verschwenken des Niederhalters 11 eingesetzt werden.

Hierdurch wird gewährleistet, dass die axiale Verstellung des Niederhalters 11 außerhalb des äußeren Umfangs 31 des oben liegenden Felgenhorns 20 erfolgt und für den Montagevorgang der auf den niederzuhaltenden Wulstteil aufgesetzte Teil 30 des Niederhalters innerhalb des äußeren Umfangrandes 31 des Felgenhorns 20 liegt, wie es in Fig. 3 dargestellt ist.

Die radiale Verstellbewegung des Niederhalters 11 kann auch durch die kombinierte Betätigung des Stellantriebs 16 und der Stellschraube 27 mit der Verschwenkung um den Drehpunkt 28 erfolgen (rechtes Ausführungsbeispiel in Fig. 2).

Wenn der Montagevorgang beendet ist und der Luftreifen 2 die in Fig. 1 im Felgentiefbett dargestellte Position einnimmt, wird der Niederhalter 11 in radialer Richtung so bewegt, dass er außerhalb des Umfangsrandes 31 des oben liegenden Felgenhorns 20 in axialer Richtung nach oben vom Reifenwulst abgehoben werden kann.

Der Niederhalter 11 kann je nach Reifensteifigkeit bei der in der Fig. 1 dargestellten vertikalen Anordnung, beispielsweise um ca. 10 mm tiefer liegen als die Montagerolle 3, mit welcher der umlaufende Montagedruck auf die oben liegende Seitenwand des Luftreifens 2 beim Montagevorgang aufgebracht wird. Die axiale Positionierung der Montagerolle 3 und des Niederhalters 11 werden so gewählt, dass der oben liegende Reifenwulst mit Sicherheit unter den jeweiligen Hump 17 bzw. 18 der aufeinanderfolgenden Scheibenräder gedrückt wird. Der unten liegende Reifenwulst liegt dabei innen am unten liegenden Felgenhorn 21 an, wie es aus den Figuren zu ersehen ist.

In diesem Montagezustand wird das Rad mit dem ungefüllten Reifen in die Füllstation gebracht. Dort wird in bekannter Weise mit einer Füllglocke der Luftreifen 2 gefüllt, wobei der oben liegende Reifenwulst über den Hump 17 bzw. 18 in den Reifenwulstsitz am oben liegenden Felgenhorn 20 bewegt wird. Der unten liegende Reifenwulst befindet sich in dem Reifenwulstsitz am unten liegenden Felgenhorn 21. Der gefüllte Luftreifen nimmt dann die in Fig. 1 strichliert dargestellte Position an der Felge 1 ein.

### [Bezugszeichenliste]

- 1: Felge
- 2: Luftreifen
- 3: Montagerolle
- 4: Reifenabweiser
- 5: Träger für den Reifenabweiser
- 6: Stellantrieb für den Reifenabweiser
- 7: Träger für die Montagerolle
- 8: Stellantrieb für die Montagerolle
- 9: gemeinsamer Träger
- 10: Stellantrieb für den Radius der Führungs-Kreisbahn des Montagewerkzeugs (Montage-Rolle 3 und Reifenabweiser 4)
- 11: Niederhalter
- 12: Träger für den Niederhalter
- 13: Stellschraube für den Niederhalter
- 14: Stellantrieb
- 15: Führungseinrichtung
- 16: Stellantrieb für die radiale Position der Führungseinrichtung 15
- 17: Hump
- 18: Hump
- 19: Führungseinrichtung
- 20: oben liegendes Felgenhorn
- 21: unten liegendes Felgenhorn
- 22: Halter
- 23: Radachse
- 24: Stellschraube für die Montagerolle
- 25: Stellschraube für den Reifenabweiser
- 26: Stellschraube für die Führungseinrichtung 19
- 27: Stellschraube für den radialen Abstand des Niederhalters 11 von der Radachse 23
- 28: Drehpunkt
- 29: Kolben-/Zylinderanordnung
- 30: Teil des Niederhalters
- 31: Umfangsrand des Felgenhorns 20

## Patentansprüche

1. Verfahren zum Montieren eines Luftreifens auf eine Felge (1) eines Kraftfahrzeugrades, bei dem der eine Reifenwulst am einen Felgenhorn und der andere Reifenwulst am Hump (17, 18) der festgehaltenen Felge (1) mittels eines Montagevorgangs, bei dem ein auf einer Kreisbahn um die Radachse (23) geführter und in axialer Richtung wirkender Druck auf die eine Seitenwand des Luftreifens ausgeübt wird, angeordnet werden, wobei bei Beginn des Montagevorgangs ein Teil des Reifenwulst in die gewünschte axiale Position über den Hump (17, 18) in das Felgentiefbett gebracht ist und in dieser Position während des weiteren sich anschließenden Montagevorgangs durch eine Niederhalterkraft niedergehalten wird,
**dadurch gekennzeichnet, dass** die axiale Position der Stelle, an welcher die Niederhaltekraft in den niedergehaltenen Teilen des Reifenwulstes eingeleitet wird, in Abhängigkeit von der axialen Lage des Humps (17, 18) an der Felge (1) für die Montagevorgänge an aufeinanderfolgenden Rädern variabel eingestellt wird.

2. Verfahren nach Anspruch 1,
**dadurch gekennzeichnet, dass** die Niederhaltekraft auf den niedergehaltenen Teil des Reifenwulstes an einer Stelle eingeleitet wird, welche gegenüber der Radachse (23) auf einem kleineren Radius liegt als der äußere Umfang des Felgenhorns (20).

3. Verfahren nach Anspruch 1 oder 2,
**dadurch gekennzeichnet, dass** die axiale Position der Kreisbahn, entlang welcher der Montagevorgang durchgeführt wird, in Abhängigkeit von der axialen Lage des

4. Vorrichtung zum Montieren eines Luftreifens auf eine Felge eines Kraftfahrzeugrades, mit einer Halteeinrichtung zum Festhalten der Felge, einer ersten Führungseinrichtung (19) zum Führen wenigstens eines Montagewerkzeugs entlang einer Kreisbahn um die Achse der festgehaltenen Felge und einer zweiten Führungseinrichtung für einen Niederhalter (11), durch welchen ein in axialer Richtung in das Felgenbett bei Beginn des Montagevorgang bewegtes Wulstteil des Luftreifens (2) während des weiteren Montagevorgangs in dieser axialen Position niedergehalten wird, wobei die zweite Führungseinrichtung (15) eine Einstelleinrichtung (12 bis 14) für die Einstellung der axialen Position des Niederhalters (11) aufweist, zur Durchführung eines Verfahrens nach Anspruch 1,
**dadurch gekennzeichnet, dass** die Einstelleinrichtung (12 bis 14) für die Einstellung der axialen Position des Niederhalters (11) in Anhängigkeit von der axialen Position des Humps (17, 18) an der Felge (1) gesteuert ist, wobei das vom Niederhalter (11) bewegte Wustteil über den Hump (17, 18) in das Felgentiefbett bewegt und niedergehalten wird. Humps (17, 18) an der Felge für die Montagevorgänge an aufeinanderfolgenden Rädern variabel eingestellt wird.

5. Vorrichtung nach Anspruch 4,
**dadurch gekennzeichnet, dass** die zweite Führungseinrichtung (15) ferner eine Einstelleinrichtung (16, 27; 28, 29) für eine radiale Position des Niederhalters (11) aufweist.

6. Vorrichtung nach Anspruch 4 oder 5,
**dadurch gekennzeichnet, dass** die radiale Position des auf den niederzuhaltenden Wulstteil aufsetzbaren Teils (30) des Niederhalters (11) während des Niederhaltens einen geringeren Abstand zur Radachse (23) aufweist als der äußere Umfangsrand (31) des Felgenhorns (20).

7. Vorrichtung nach einem der Ansprüche 4 bis 6,
**dadurch gekennzeichnet, dass** die erste Führungseinrichtung (19) eine Einstelleinrichtung (5 bis 8), mit welcher die axiale Position der Kreisbahn, auf welcher das wenigstens eine Montagewerkzeug (3, 4) geführt wird, in Abhängigkeit von der jeweiligen axialen Lage des Humps (17, 18) an der festgehaltenen Felge (1) einstellbar ist.

8. Vorrichtung nach Anspruch 7,
**dadurch gekennzeichnet, dass** die erste Führungseinrichtung (19) einen Träger (5, 7) aufweist, mit welchem das wenigstens eine Montagewerkzeug (3, 4) auf der Kreisbahn geführt wird.

9. Vorrichtung nach Anspruch 7 oder 8,
**dadurch gekennzeichnet, dass** die Einstelleinrichtung (5 bis 8) an der ersten Führungseinrichtung (19) einen Stellantrieb (6, 8) für wenigstens zwei Montagewerkzeuge (3, 4) aufweist.

10. Vorrichtung nach Anspruch 9,
**dadurch gekennzeichnet, dass** die erste Führungseinrichtung (19) für die Stellantriebe (6, 8) der jeweils zwei Montagewerkzeuge (3, 4) einen gemeinsamen Träger (9) aufweist.

11. Vorrichtung nach einem der Ansprüche 4 bis 10,
**dadurch gekennzeichnet, dass** die axiale Position des wenigstens einen Montagewerkzeugs (3, 4) und/oder des Niederhalters (11) stufenlos einstellbar ist.

12. Vorrichtung nach einem der Ansprüche 4 bis 11,
**dadurch gekennzeichnet, dass** die Felge (2) beim Montagevorgang in einer horizontalen Position festgehalten ist.

## Claims

1. A method of fitting a pneumatic tyre on to a rim (1) of a motor vehicle wheel, in which the one tyre bead is arranged at the one rim flange and the other tyre bead is arranged at the rim hump (17, 18) of the rim (1) which is held fast, by means of a fitting procedure in which a pressure which is guided on a circular path around the wheel axis (23) and which acts in the axial direction is applied to the one side wall of the pneumatic tyre, wherein at the beginning of the fitting procedure a part of the tyre bead is moved into the desired axial position over the rim hump (17, 18) into the rim well base and is held down in that position during the further subsequent fitting procedure by a hold-down force,
**characterised in that** the axial position of the location at which the hold-down force is applied to the held-down parts of the tyre bead is variably adjusted in dependence on the axial position of the rim hump (17, 18) on the rim (1) for the fitting procedures on successive wheels.

2. A method according to claim 1 **characterised in that** the hold-down force is applied to the held-down part of the tyre bead at a location which in relation to the wheel axis (23) is on a smaller radius than the outer periphery of the rim flange (20).

3. A method according to claim 1 or claim 2 **characterised in that** the axial position of the circular path along which the fitting procedure is carried out is variably adjusted in dependence on the axial position of the rim hump (17, 18) on the rim for the fitting procedures on successive wheels.

4. Apparatus for fitting a pneumatic tyre on to a rim of a motor vehicle wheel comprising a holding device for holding the rim fast, a first guide device (19) for guiding at least one fitting tool along a circular path around the axis of the rim which is held fast and a second guide device for a hold-down means (11) by which a bead part of the pneumatic tyre (2), which is moved in the axial direction into the rim base at the beginning of the fitting procedure, is held down during the further fitting procedure in that axial position, wherein the second guide device (15) has an adjusting device (12 to 14) for adjusting the axial position of the hold-down means (11), for carrying out a method according to claim 1,
**characterised in that** the adjusting device (12 to 14) for adjusting the axial position of the hold-down means (11) is controlled in dependence on the axial position of the rim hump (17, 18) on the rim (1), wherein the bead part which is moved by the hold-down means (11) is moved over the rim hump (17, 18) into the rim well base and held down.

5. Apparatus according to claim 4 **characterised in that** the second guide device (15) further has an adjusting device (16, 27; 28, 29) for a radial position of the hold-down means (11).

6. Apparatus according to claim 4 or claim 5 **characterised in that** the radial position of the part (30) of the hold-down means (11), which can be placed on the bead part to be held down, is at a smaller spacing relative to the wheel axis (23) during the holding-down operation than the outer peripheral edge (31) of the rim flange (20).

7. Apparatus according to one of claims 4 to 6 **characterised in that** the first guide device (19) has an adjusting device (5 to 8) with which the axial position of the circular path on which the at least one fitting tool (3, 4) is guided is adjustable in dependence on the respective axial position of the rim hump (17, 18) on the rim (1) which is held fast.

8. Apparatus according to claim 7 **characterised in that** the first guide device (19) has a carrier (5, 7) with which the at least one fitting tool (3, 4) is guided on the circular path.

9. Apparatus according to claim 7 or claim 8 **characterised in that** the adjusting device (5 to 8) at the first guide device (19) has a control drive (6, 8) for at least two fitting tools (3, 4).

10. Apparatus according to claim 9 **characterised in that** the first guide device (19) for the control drives (6, 8) of the two respective fitting tools (3, 4) has a common carrier (9).

11. Apparatus according to one of claims 4 to 10 **characterised in that** the axial position of the at least one fitting tool (3, 4) and/or the hold-down means (11) is steplessly adjustable.

12. Apparatus according to one of claims 4 to 11 **characterised in that** the rim (2) is held fast in a horizontal position in the fitting procedure.

## Revendications

1. Procédé de montage d'un pneumatique sur une jante (1) d'une roue de véhicule automobile, dans lequel un talon du pneu est disposé sur un rebord de jante, et l'autre talon est disposé sur l'épaulement (17, 18) de la jante (1) maintenue, au moyen d'un processus de montage dans lequel une pression, guidée sur une trajectoire circulaire autour de l'axe de roue (23) et agissant dans la direction axiale, est exercée sur une paroi latérale du pneumatique, une partie du talon du pneu étant amenée, au début du processus de montage, dans la position axiale souhaitée au-dessus de l'épaulement (17, 18) dans le creux de la jante, et étant maintenue enfoncée dans cette position par une force de serre-flan pendant la partie suivante du processus de montage,
**caractérisé en ce que** la position axiale de l'endroit dans lequel la force de serre-flan est induite dans les pièces maintenues enfoncées du talon du pneu est réglée de façon variable, en fonction de la situation axiale de l'épaulement (17, 18) sur la jante (1), pour les processus de montage sur les roues successives.

2. Procédé selon la revendication 1,
**caractérisé en ce que** la force de serre-flan est induite sur la partie maintenue enfoncée du talon du pneu dans un endroit qui, par rapport à l'axe de roue (23), est situé sur un rayon plus petit que la circonférence extérieure du rebord de jante (20).

3. Procédé selon la revendication 1 ou 2,
**caractérisé en ce que** la position axiale de la trajectoire circulaire le long de laquelle le processus de montage est effectué est réglée de façon variable, en fonction de la situation axiale de l'épaulement (17, 18) sur la jante, pour les processus de montage sur des roues successives.

4. Dispositif de montage d'un pneumatique sur une jante d'une roue de véhicule automobile, avec un équipement de retenue pour le maintien de la jante, un premier équipement de guidage (19) pour le guidage d'au moins un outil de montage le long d'une trajectoire circulaire autour de l'axe de la jante maintenue, et un deuxième équipement de guidage pour un serre-flan (11), par lequel une partie de talon du pneumatique (2), déplacée dans la direction axiale dans le fond de jante au début du processus de montage, est maintenue enfoncée pendant la suite du processus de montage dans cette position axiale, le deuxième équipement de guidage (15) présentant un équipement de réglage (12 à 14) pour le réglage de la position axiale du serre-flan (11), pour l'exécution d'un procédé selon la revendication 1,
**caractérisé en ce que** l'équipement de réglage (12 à 14), pour le réglage de la position axiale du serre-flan (11), est commandé en fonction de la position axiale de l'épaulement (17, 18) sur la jante (1), la partie de talon déplacée par le serre-flan (11) étant déplacée sur l'épaulement (17, 18) dans le creux de jante et maintenue enfoncée.

5. Dispositif selon la revendication 4,
**caractérisé en ce que** le deuxième équipement de guidage (15) présente en outre un équipement de réglage (16, 27 ; 28, 29) pour une position radiale du serre-flan (11).

6. Dispositif selon la revendication 4 ou 5,
**caractérisé en ce que** la position radiale de la partie (30) du serre-flan (11) pouvant être montée sur la partie de talon à maintenir enfoncée présente, pendant le maintien enfoncé, un intervalle plus petit par rapport à l'axe de roue (23) que le bord périphérique extérieur (31) du rebord de jante (20).

7. Dispositif selon une des revendications 4 à 6,
**caractérisé en ce que** le premier équipement de guidage (19) présente un équipement de réglage (5 à 8) avec lequel la position axiale de la trajectoire circulaire, sur laquelle l'outil de montage (3, 4), au moins au nombre de un, est guidé, est réglable en fonction de la position axiale respective de l'épaulement (17, 18) sur la jante (1) maintenue.

8. Dispositif selon la revendication 7,
**caractérisé en ce que** le premier équipement de guidage (19) présente un support (5, 7) par lequel l'outil de montage (3, 4), au moins au nombre de un, est guidé sur la trajectoire circulaire.

9. Dispositif selon la revendication 7 ou 8,
**caractérisé en ce que** l'équipement de réglage (5 à 8) présente, sur le premier équipement de guidage (19), un mécanisme de commande (6, 8) pour au moins deux outils de montage (3, 4).

10. Dispositif selon la revendication 9,
**caractérisé en ce que** le premier équipement de guidage (19) pour les mécanismes de commande (6, 8) des respectivement deux outils de montage (3, 4) a un support commun (9).

11. Dispositif selon une des revendications 4 à 10,
**caractérisé en ce que** la position axiale de l'outil de montage (3, 4), au moins au nombre de un, et/ou du serre-flan (11) est réglable en continu.

12. Dispositif selon une des revendications 4 à 11,
**caractérisé en ce que** la jante (2) est, lors du processus de montage, maintenue dans une position horizontale.
